# EUROPEAN PATENT APPLICATION

(11) **EP 1 518 750 A1**
(43) Date of publication of application: **30.03.2005**
(21) Application number: 04425689.9
(22) Date of filing: 16.09.2004
(51) Int. Cl.: B60P 1/02, B60P 3/04

(54) **Livestock transport vehicle**

(30) Priority: 26.09.2003 IT BS20030087
(71) Applicant: Carrozzeria Pezzaioli S.r.l., 25018 Montichiari (Brescia) (IT)
(72) Inventor: Pezzaioli, Giorgio, 25018 Montichiari (Brescia) (IT)
(74) Representative: Crippa, Paolo Ernesto

(57) **Abstract**

The present invention relates to a transport vehicle, comprising a body inside which at least one platform (14) is provided that can be moved in height by at least one pair of cylinder units (24,25), which are operatively mechanically connected in series. Each pair of cylinder units comprises cylinders that are integral, set side by side and co-operating with stems protruding from opposite directions. The platform is fixed to supporting arms attached to the top of the stems facing upwards.

## Description

The present invention relates to livestock transport vehicles, or more generally, other articles, with one or more platforms that are moveable in height inside the body.

Livestock transport vehicles are already known, with at least one platform provided in the body, which can be positioned in height to form at least one extra loading surface, besides that of the vehicle.

For example, in a previous patent for Industrial Invention N. 1.172.018 in the name of the same Applicant a lorry for transporting livestock is described, comprising at least one platform inside the relative body, which can be moved in height with hydraulic cylinders, with four lateral driving means guided along guide uprights provided on the walls of the body, and wheels joined to an equal number of vertical extension chains for raising and lowering the platform. The guide uprights present a C section open towards the inside of the body, whilst the means for driving the platform are each made up of two L elements and spaced out to define a channel-shaped slot between them, the wheels and chains being level with said slots.

In these known embodiments, the four hydraulic cylinders for controlling the height movements of the platform are telescopic and therefore present a considerable size, which significantly limits the internal load volume of the body.

Cable handling systems are also used instead of hydraulic actuators, which, despite being of a reduced size compared with the telescopic cylinders, are, however, less strong and more easily subject to breaking, also due to corrosion caused by the urine of the animals.

It is an object of the present invention to propose a vehicle such as the one described in the above-stated patent by the same Applicant, wherein the size of the hydraulic actuators for operating the platform is greatly reduced in comparison with that of the current telescopic cylinders, thus allowing platforms with a greater surface to be mounted onto the vehicle, maintaining an elevated running height and the external measurements of the vehicle permitted by the highway code.

Such object is achieved with a vehicle, in particular, for transporting livestock, according to at least claim 1 that will follow.

Additional details of the invention will nonetheless be further appreciated during the course of the description that is reported below, with reference to the accompanying drawings, which are indicative and not limiting, wherein:
- Figure 1 shows a rear perspective view of a vehicle with two loading platforms;
- Figure 2 shows the means for driving and operating the platform;
- Figure 2a shows an enlarged detail of these means in a perspective view;
- Figure 3 shows a view from above of an enlarged detail of the aforesaid means;
- Figure 4 shows a view from above of the only device for synchronising the movements of the platform.

In said figures, the body of a transport vehicle is globally indicated with reference numeral 11, with contrasting vertical uprights 12 extending along its lateral sides 11'. At least one loading platform 14 is provided in the body guided along the uprights 12, which can be moved and positioned in height above the level surface 13 of the vehicle.

A first guide section 12' is made in each upright 12 with a C section open towards the inside of the body along which respective driving means 15 are designed to run; the driving means are provided on the sides of the platform 14 opposite the side walls of the body 11.

Each driving means 15 is configured to join to a corresponding profile 12' and define an axial channel-shaped slot 17, in which a chain 18 extends, which is fixed and resting against a confirmation profile 18'.

A device for synchronising the movements of the platform is applied below the platform 14. This device comprises two longitudinal shafts 20 mounted onto supports 19 fixed beneath the platform 14, onto which pinions 21 are keyed to join to and move along the chains 18. The longitudinal shafts 20 are connected by transversal shafts 22 and pairs of conical wheels 23 to guarantee synchronised rotation of all of the pinions 21, and consequently constantly parallel positioning and movement of the platform, independently of the distribution of the load on the platform.

Pairs of single acting cylinder units 24, 25 are provided to control the height movements of the platform 14, which are operatively connected in series and cooperating with stems 24', 25' protruding from opposite directions. In more detail, each pair of cylinder units is mounted vertically and extends at the side of a respective C guide section 12'. One cylinder unit therefore comprises a stem 24' facing downwards.

According to a preferred embodiment of the invention, the cylinders of each pair of cylinder units are arranged side by side and integral, for example by welding. Therefore, in practice, the second is also moved by operating just one of the two cylinders of a pair.

A block 26 is constrained to the top of the stem 24' facing upwards, to which an arm 27 is suitably fixed for raising the platform.

Advantageously, each pair of cylinder units 24, 25 can be contained in a second profile 12", where the driving means 15 run. In this case, the block 26 carrying the arm 27 is configured to run along said second guide section 12".

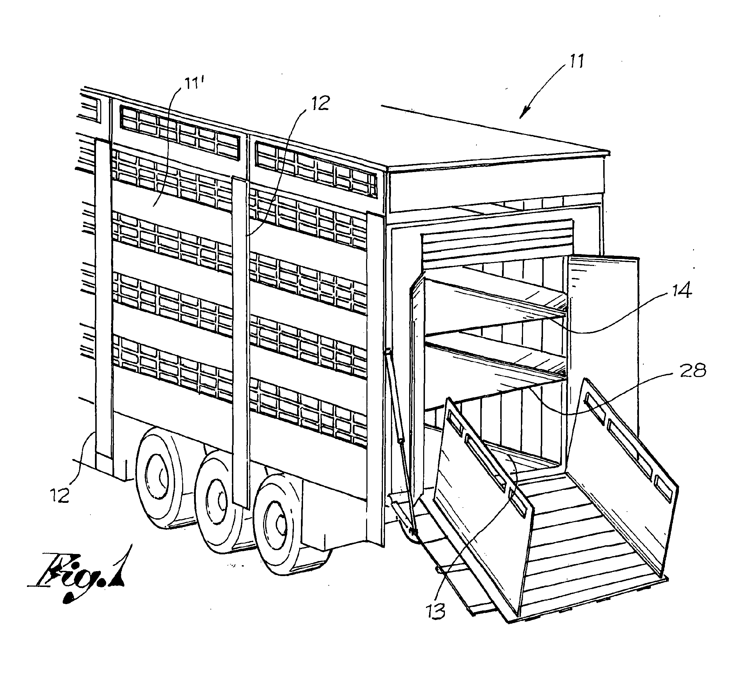

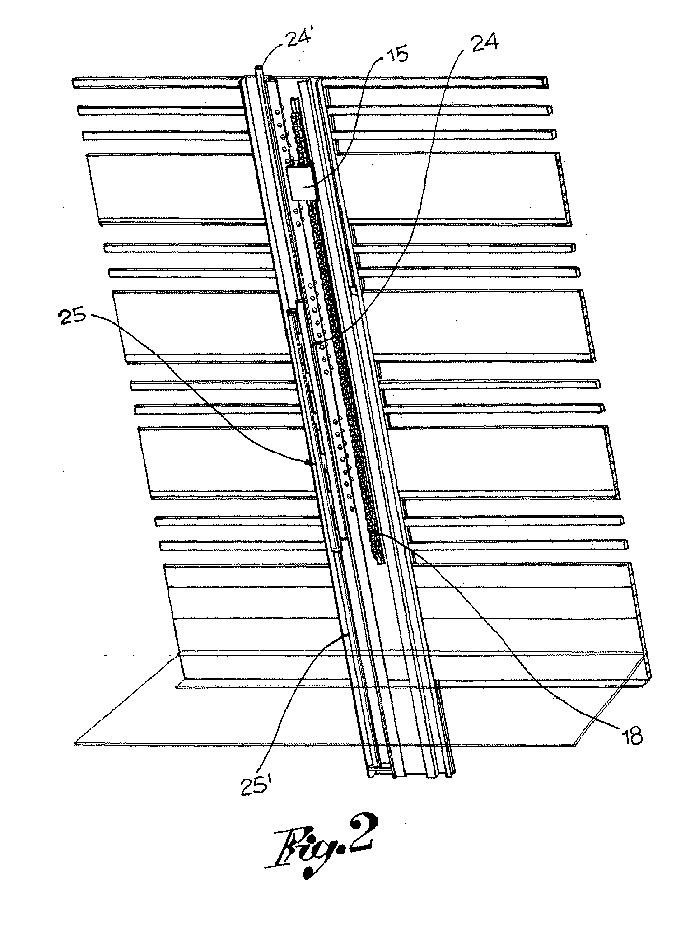

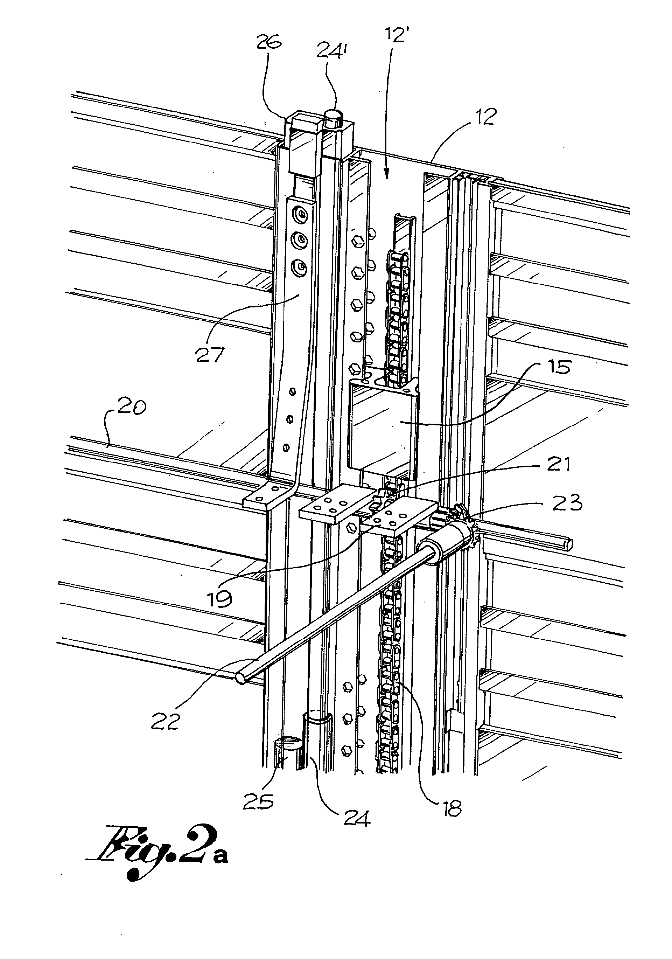

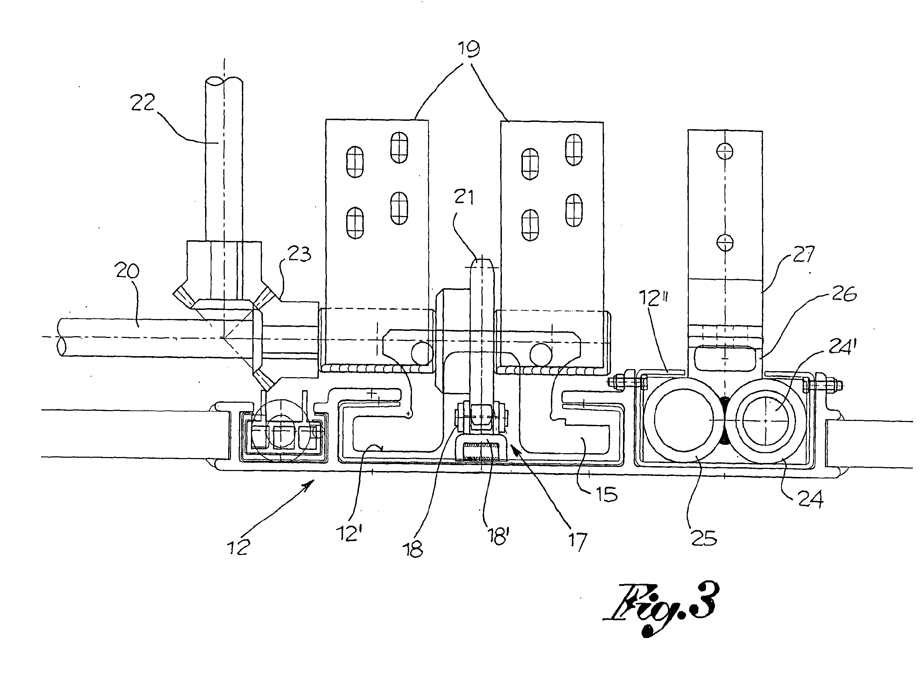

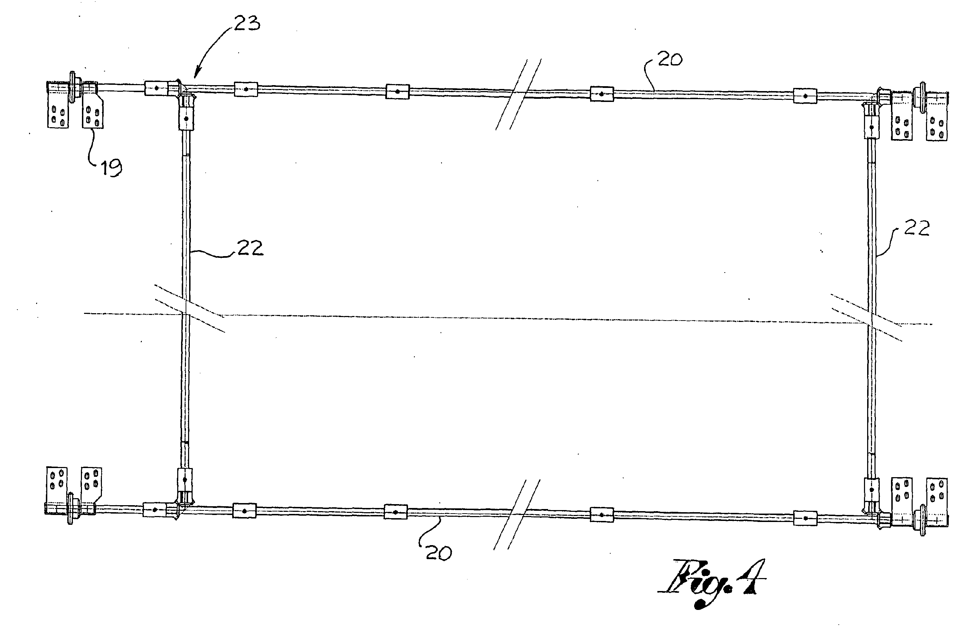

As is clear from the view of figure 3, the pairs of cylinder units 24, 25 contained in the uprights 12 protrude slightly from the lateral sides 11 of the vehicle towards the inside of the body, taking up an even smaller volume compared with that determined by the driving means 15.

Finally, it shall be noted that at least one second loading platform 28 can be fixed along the pairs of cylinder units 24,25, and guided along the uprights 12 with the above-described driving means.

By way of example, maintaining the same maximum external measurements permitted by the highway code, the vehicle proposed here allows an internal width of 2,42 m to be used, and so two pallets, 1,20 m each, can be transported, which is impossible in the present vehicles with hydraulically controlled platforms.

## Claims

1. Transport vehicle, in particular, but not exclusively for transporting livestock, comprising a body inside which at least one platform (14) is provided, which is movable in height by means of hydraulic actuators, **characterised in that** said hydraulic actuators comprise at least one pair of cylinder units (24, 25), which are operatively connected in series.

2. Vehicle according to claim 1, wherein each pair of cylinder units comprises cylinders that are integral and which co-operate with stems protruding from opposite directions.

3. Vehicle according to claim 2, wherein, in each pair of cylinder units, one cylinder co-operates with a stem facing upwards and the other cylinder co-operates with a stem facing downwards.

4. Vehicle according to claim 2 or 3, wherein the cylinders of each pair of cylinder units are arranged side by side.

5. Vehicle according to claim 3 or 4, wherein the platform (14) is fixed to the top of the stems facing upwards.

6. Vehicle according to claim 5, wherein the platform (14) is fixed to supporting arms (27) constrained to the top of the stems facing upwards.

7. Vehicle according to any one of the previous claims, comprising lateral driving means (15) guided along guide sections (12') made in vertical uprights (12) provided on the sides of the body.

8. Vehicle according to claim 7, wherein each pair of cylinders is mounted at the side of a respective guide section (12').

9. Vehicle according to claim 8, wherein each pair of cylinders is contained in a vertical guide section with a C section (12'') made in the upright (12), adjacently to the guide section (12').

10. Vehicle according to claims 6 and 9, wherein each supporting arm (27) is fixed to a block (26) constrained to the top of a respective stem and configured to run along the guide section (12").

11. Vehicle according to any one of the previous claims, wherein the cylinders (24, 25) are single acting cylinders.
